# EUROPEAN PATENT SPECIFICATION

(11) **EP 1 202 497 B1**
(45) Date of publication and mention of the grant of the patent: **28.04.2004**
(21) Application number: 01102512.9
(22) Date of filing: 05.02.2001
(51) Int. Cl.: H04L 12/46

(54) **Network communication apparatus, bridge apparatus and corresponding methods**
Netzwerkkommunikations-Einrichtung und Netzwerkbrücke und zugehörige Verfahren
Appareil de communication réseau et pont et méthodes correspondantes

(30) Priority: 29.09.2000 JP 2000300444
(43) Date of publication of application: 02.05.2002
(73) Proprietor: KABUSHIKI KAISHA TOSHIBA, Kawasaki-shi (JP)
(72) Inventor: Emura, Noriaki, c/o Kabushiki Kaisha Toshiba, Minato-ku Tokyo 105-8001 (JP); Kokubo, Takashi, c/o Kabushiki Kaisha Toshiba, Minato-ku Tokyo 105-8001 (JP)
(74) Representative: Henkel, Feiler & Hänzel

(56) References cited:
- DE-A- 19 835 668
- "Digital Transmission Content Protection Specification Volume 1 (Informational Version) Revision 1.1" INTERNET, [Online] 25 July 2000 (2000-07-25), XP002190497 Retrieved from the Internet: <URL:www.dtcp.com> [retrieved on 2002-02-18]
- "Serial Bus reset detection" INTERNET, 20 March 1997 (1997-03-20), XP002190496

## Description

The present invention relates to the technique of digital data transfer through a network and, in particular, to performing processing involved upon the occurrence of bus resetting.

In recent times, a high-speed multi-function data transmission technique using a digital transmission via a network has been quickly accepted in the data transmission art. Such data transfer is indispensable to its systematization and its high functioning, but, since the data (contents) flowing on a transmission path is very easier to illegally alter and reproduce than the analog data, it is necessary to provide a protection technique for protecting its contents.
As one standardized technique for this purpose there is, for example, a DTCP (Digital Transmission Content Protection) standard-reference is invited to http://www. dtcp. com. This is the technique developed to protect digital synchronization type packet data which flows on the IEEE1394 high-speed serial bus from being altered or illegally reproduced and its specification is laid open to the public at the above-mentioned URL. This DTCP standard has already been used upon transmitting/receiving data between the digital television and the digital VHS.

The DTCP standard is used in data transmission not only on the IEEE1394 high-speed serial bus but also on another bus such as a USB (Universal Serial Bus) bus and is now expanding its use as a standard under which data transmission is made across different buses.

The authentication processing represented by such DTCP processing is such that, in the case of performing DTCP processing between the nodes on different buses, it is done via a DTCP bridge through which these different buses are connected. Jpn. Pat. Appln. KOKAI Publication No. 11-68884 discloses an example of performing signal processing between apparatuses on different buses with the use of such a bridge apparatus and performing such processing via the bridge apparatus through which signals are handled.

In the case where "bus resetting" occurs on one bus (first bus) during the authentication of the DTCP processing in a network connected to a DTCP bus bridge via which the DTCP processing is performed directly between the node apparatuses on different buses, the apparatus connected to the first bus restarts the DTCP processing from the outset on the basis of the DTCP standard. Since, on the other hand, the apparatus connected to the bus (second bus) not involving "bus resetting" does not detect the occurrence of the bus resetting, it tries to continue the DTCP processing. Since, in this case, the apparatus A on the first bus tries to restart the DTCP processing from the outset while, on the other hand, the apparatus B tries to continue the DTCP processing, there occurs a process mismatching between the apparatus A and the apparatus B and, in this case, the DTCP processing becomes unsuccessful.

DE 198 35 668 A1 discloses an network communication apparatus according to the pre-characterizing part of claim 1. In detail, this document discloses that the apparatus of a communication party is notified of the occurrence of bus resetting. However, the document does not disclose anything suggesting whether or not related authentication processing is performed, and provides no details of a processing that is executed after the authentication processing.

It is accordingly to object of the present invention to provide a network communication apparatus and bus bridge apparatus which, when authentication processing is performed via the bus bridge apparatus, can do it stably even if bus resetting occurs.

According to the present invention the above object is achieved by a network communication apparatus according to claim 1, a bridge apparatus according to claim 5,a network communication method according to claim 9 or a bridge communication method according to claim 10. The dependent claims are related to further advantageous aspects of the invention.

In the network communication apparatus of the present invention, when the bus resetting occurs on the first network, a corresponding notify signal is generated and supplies it to the node apparatus on the second network. By doing so, even when DTCP processing for example is currently progressed, it is possible to eliminate any inconvenience that one apparatus interrupts current processing while the other associated apparatus continues the processing, and to take a synchronization between both the apparatuses during the processing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a digital information apparatus having a network communication function according to the present invention and its one form of network;
FIG. 2 is a view showing a practical digital information apparatus having a network communication function according to the present invention and its one form of network;
FIG. 3 is an explanatory view for explaining DTCP processing performed between different nodes on respective buses via a bus bridge in a network according to the present invention;
FIG. 4 is an explanatory view for explaining DTCP processing between different nodes on respective buses via a plurality of bus bridges in a network according to the present invention;
FIG. 5 is a timing chart showing the steps of performing DTCP processing between different nodes on respective buses via a bus bridge in a network according to the present invention;
FIG. 6 is a timing chart showing the steps of performing DTCP processing between different nodes on respective buses via a bus bridge in a network according to the present invention;
FIG. 7 is a timing chart showing the steps of performing DTCP processing between different nodes on respective buses via a bus bridge in a network according to the present invention;
FIG. 8 is a flow chart showing the generation of a bus reset notify signal corresponding to the occurrence of bus resetting in a network according to the present invention;
FIG. 9 is a flow chart showing processing performed upon receipt of a bus reset signal in a network according to the present invention; and
FIG. 10 is a block diagram showing one form of a bus bridge apparatus usable in a network according to the present invention.

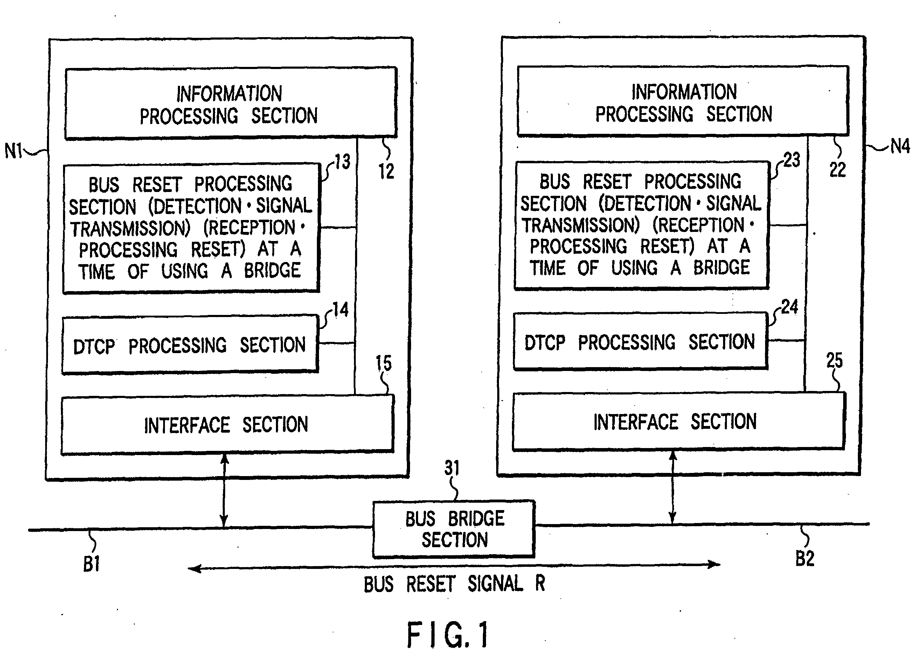

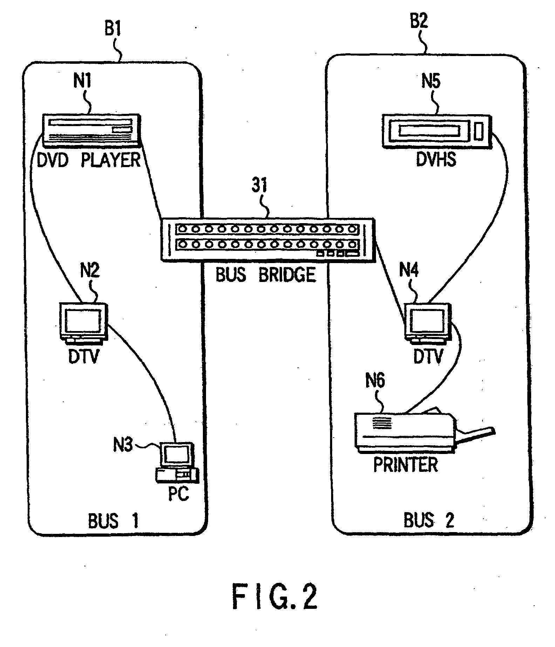

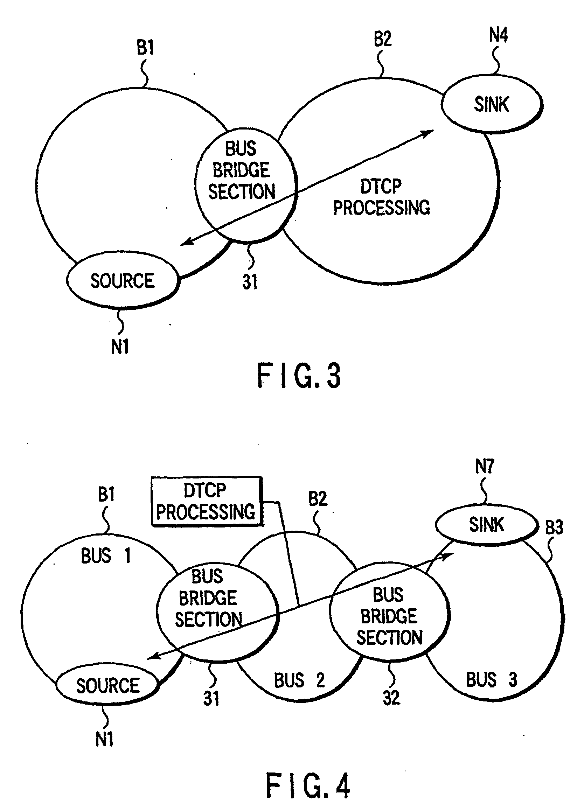

One embodiment of the present invention will be described in more detail below with reference to the accompanying drawings. FIG. 1 is a view showing a digital information apparatus having a network communication function according to the present invention and a practical network using this apparatus and FIG. 2 is a view showing a practical digital information apparatus and its one form of network. FIG. 3 is an explanatory diagram for performing DTCP processing between different nodes on respective buses via a bus bridge in the network according to the present invention and FIG. 4 is an explanatory view for performing DTCP processing between different nodes on respective buses via a plurality of bus bridges.

### <Network Apparatus according to the Present Invention>

The digital information apparatus having a network communication function according to the present invention, if it relates to a system handling image data for example, involves various units such as a DVD player, digital television, personal computer, digital video tape recorder and printer, but the present invention is not restricted thereto and various cases may be considered in accordance with a protocol under which the system is connected. In FIG. 1, a digital information apparatus N1 having a network communication function includes an information processing section 12 for performing processing in inherent digital data, such as a data processing section, etc., for performing processing on digital data read by a disk reading mechanism from a disk as in the case of a DVD player, a bus reset processing section 13 as in the case of using a bridge apparatus constituting the feature of the present invention, a DTCP processing section 14 and an interface 15. Further, the digital information apparatus N1 is connected to a first digital bus B1 and also to a bus bridge apparatus 31 via which a plurality of buses are connected.

A digital information apparatus N4 has a network communication function connected to a second digital bus B2 via the bus bridge apparatus 31 and includes, as in the case of the digital information apparatus N1, an information processing section 22 for performing processing on inherent digital data, a bus reset processing section 23 connected to the information processing section 22 as in the case of using a bridge apparatus, a DTCP processing section 24 and an interface 25.

FIG. 2 shows one form of system configuration with a plurality of buses B1, B2 connected together via a bus bridge apparatus 31 and, if this is a system based on image data for example, it may be considered for example that, in a first bus B1, each node apparatus includes a DVD player N1, digital television N2, personal computer N3, etc., and, in a second bus B2, a digital television N4, a digital video tape recorder N5, a printer N6, etc. The respective node apparatus have their interfaces 15, 25 provided under a protocol of the IEEE1394 as one example and, even at an operation time, a detachable connection can be made between the respective node apparatuses and it is possible to readily transfer digital data. Further, by providing the bus bridge 31, there is no upper limit in the number of node apparatuses connectable to one bus under the IEEE1394 protocol and authentication processing and data transfer processing can be performed between node apparatuses on different buses, that is, between the DVD player N1 and the digital television N4.

In the case where the authentication processing, such as the DTCP processing, is performed in a network apparatus having a plurality of buses connected via the bus bridge apparatus shown in FIGS. 1 and 2, it is as shown in FIG. 3 and direct DTCP processing is carried out between the apparatuses on different 1394 buses. It is to be noted that an apparatus N1 on the 1394 bus B1 serves as a source (content transmitting side) and an apparatus N4 on the 1394 bus B2 serves as a sink (content receiving side).

The number of buses involved is not always two and, as shown in FIG. 4, three or more buses are involved under a plurality of bus bridges 31, 32 via which it is possible to perform communication processing as in the case of the node apparatus N7.

In the case of a system having a plurality of bus bridge apparatuses, if bus resetting occurs, a correspondingly generated bus reset notify signal may be transmitted directly to the node apparatus N7 serving as another communication party and is preferably transmitted to a bus bridge apparatus 32 connected to that node apparatus.

### <Practical Steps of DTCP processing according to the Present Invention>

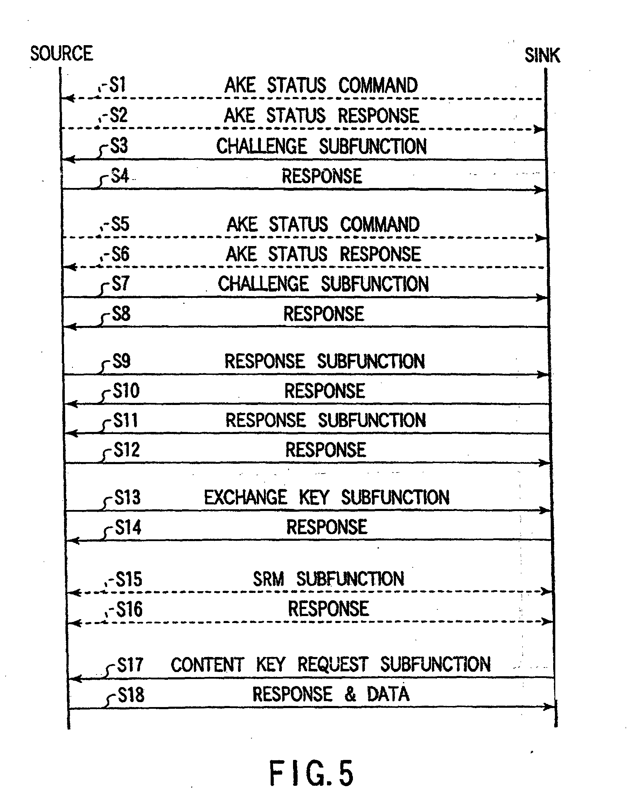

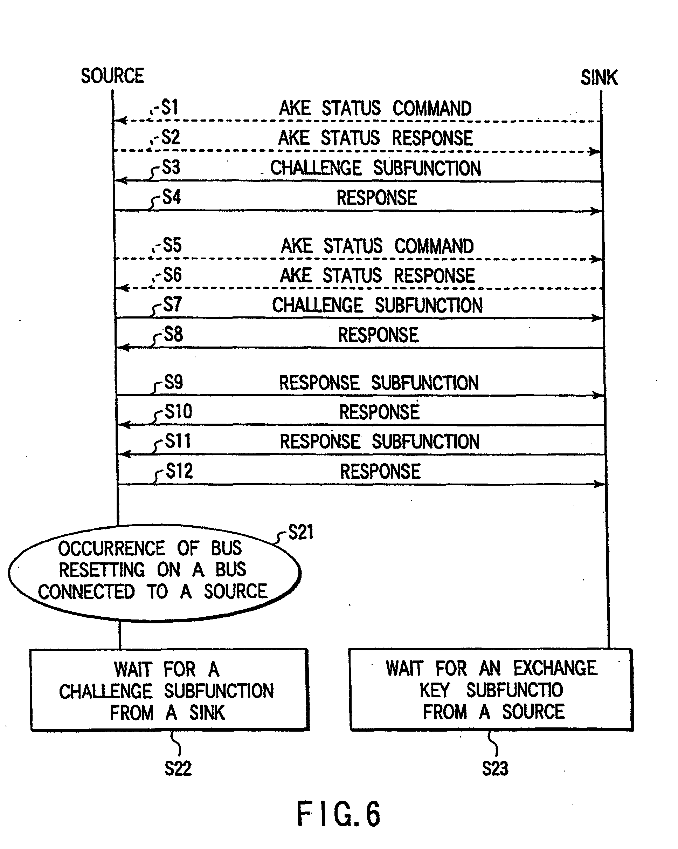

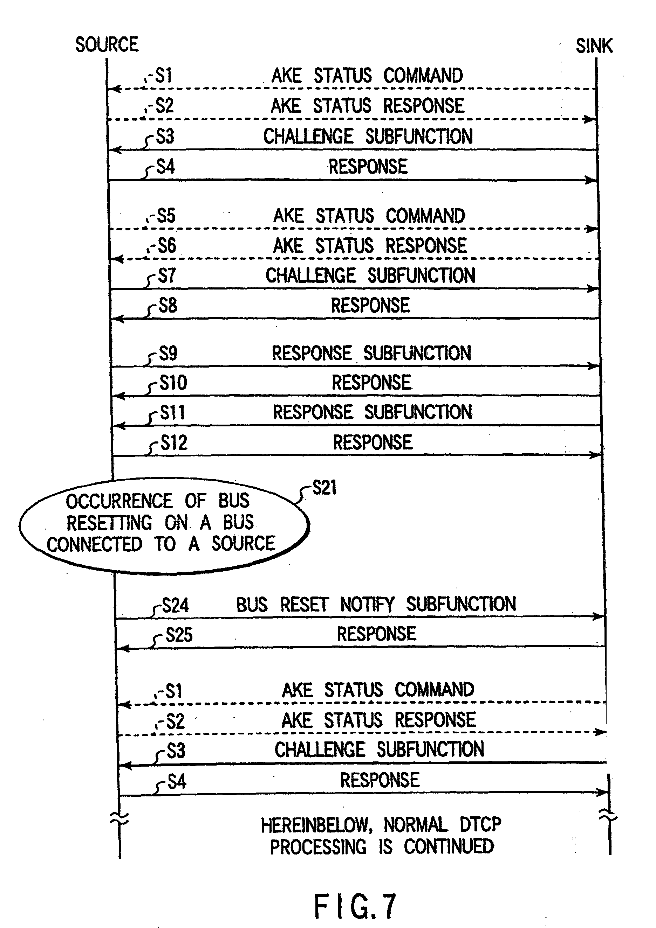

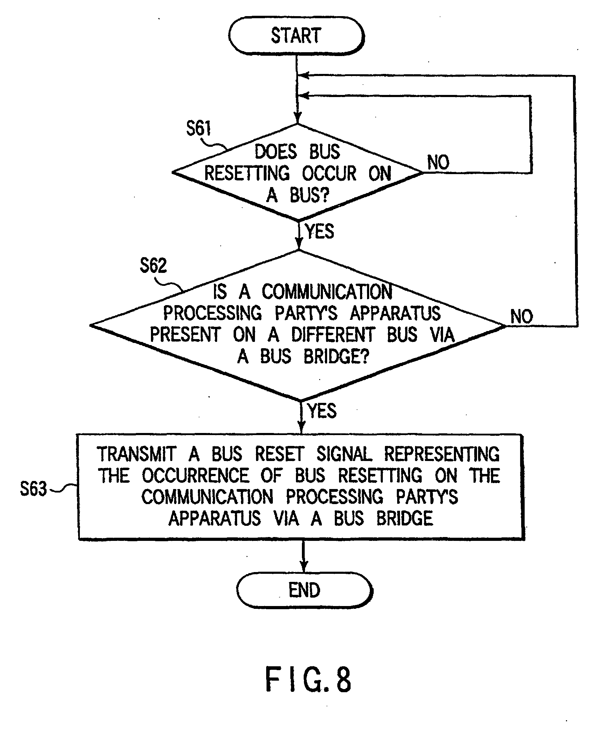

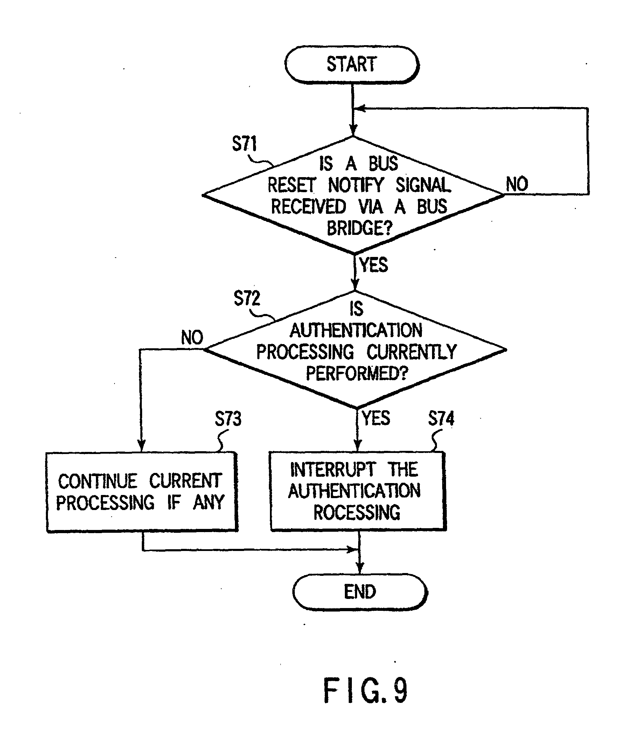

In the network system thus configured, the operation of the network communication apparatus of the present invention will be explained in more detail below with the use of a timing chart and flow chart. FIG. 5 is a timing chart showing the steps of the DTCP processing between different nodes on respective buses connected via the bus bridge, FIG. 6 is a timing chart showing the steps of performing the DTCP processing between different nodes on the respective buses connected via the bus bridge, and FIG. 7 is a timing chart showing the steps of performing the DTCP processing between different nodes on the respective buses connected via the bus bridge. Further, FIG. 8 is a flow chart showing the generation of the bus reset notify signal in accordance with the occurrence of the bus resetting and FIG. 9 is a flow chart showing the processing involved upon receipt of a bus reset notify signal.

In the case where, between the different 1394 buses B1 and B2 as shown in FIG. 3, apparatus authentication under copy protection -hereinafter referred to as an AKE (Authentication Key Exchange)- such as the DTCP processing is performed directly between the nodes N1 and N4, the normal process is as indicated in the timing chart shown in FIG. 5. It is to be noted that FIG. 5 is the timing chart in the case where there arises no bus resetting.

That is, the following processing is performed by the operation of the bus reset processing section 13, DTCP processing section 14 and interface 15 at the source-side node apparatus N1 at the time of using the bridge and the operation of the bus reset processing section 23, DTCP processing section 24 and interface 25 at the sink-side node apparatus N4 at the time of using the bridge. That is, from the sink-side node apparatus N4, an AKE status command is transferred to the source-side node apparatus N1 (S1) and an AKE status response is transferred from the node apparatus N1 (S2) to the sink-side node apparatus. Then a challenge subfunction is transferred from the node apparatus N4 (S3) and a response is transferred from the node apparatus N1 to the node apparatus N4 (S4). Then an AKE status command is transferred from the node apparatus 1 to the node apparatus N4 (S5) and an AKE status response is transferred from the node apparatus N4 to the node apparatus N1 (S6). Then a challenge subfunction is transferred from the node apparatus N1 to the node apparatus N4 (S7) and a response is transferred from the node N4 (S8). Then a response subfunction is transferred from the apparatus node N1 to the apparatus node N4 (S9) and a response is transferred from the node apparatus N4 (S10) and, further, a response subfunction is transferred from the node N4 (S11). Then a response is transferred from the node apparatus N1 (S12) and, further, an exchange subfunction is transferred from the node apparatus N1 (S13) and, from the node apparatus N4, a response is transferred (S14) and an SRM subfunction is transferred (S15) and a response is transferred (S16). Further, from the node apparatus 14, a content key request subfunction is transferred (S17) and, from the node apparatus N1, a response and data are transferred (S18).

Although such normal DTCP processing is performed in a process such as steps S1 to S18, if bus resetting occurs at the source-side bus B1 as shown in FIG. 6 (S21), then it follows that, unless later-described processing constituting the feature of the present invention is performed, no further process goes in such a state that the source side waits for a challenge subfunction from the sink side (S22) and the sink side waits for an exchange key subfunction from the source side. As a result, time-out occurs at the sink side after a time set under the DTCP standard.

The processing at the time-out at the sink site is outside the range of the standard and, if the sink site transmits the challenge subfunction to the source site and the DTCP processing is restarted, then the DTCP processing becomes successful. In this case, since the DTCP processing is not quickly finished, it takes some time to recover the contents at the sink site and it may be considered that, in some case, the contents are not recovered in a due recovery time and the sink-side system halts its recover operation.

In the case where time-out occurs at the sink site, if the specification is such that the sink site does not resume the DTCP processing, then the DTCP processing becomes unsuccessful and no contents are recovered and recorded at the sink site. Therefore, there is a risk that the user cannot see, hear and record/reserve now receiving contents due to the occurring of bus resetting on another bus.

In order to avoid such an inconvenience, processing as indicated by a timing chart of FIG. 7 is performed on the embodiment according to the present invention. That is, when bus resetting occurs on a 1394 bus B1 during authentication processing and the occurrence of the bus resetting is detected (S61) in accordance with the flow chart shown in FIG. 8, if a node apparatus of an authentication processing's party is situated on a different bus via the bus bridge (S62), a bus reset signal R representing the occurrence of the bus resetting at the node apparatus N4 of the communication processing's party is generated and it is transmitted to the node apparatus of the authentication processing's party (S63). It is also preferable to, at this time, transfer it to all node apparatuses on that party-side bus.

Further, the bus reset signal R defines a new AKE command (AKE BUS RESET NOTIFY subfunction command) and it is preferably used as indicated in a timing chart shown in FIG. 7 (S24).

In accordance with the flow chart shown in FIG. 9, the bus reset processing section 23 of the sink-side node apparatus N4, upon receipt of the bus reset signal R via the bus bridge 31 (S71), judges whether or not any authentication processing such as the DTCP processing, etc., is performed (S72). If YES, it cancels a subsequent command signal so as to interrupt the authentication processing. If the authentication processing is not performed and any other processing is performed, it is continued (S73).

By doing so, the sink-side node apparatus N4 receiving the bus reset notice returns a response signal to the source site (S25) and, after this, authentication processing, that is, AKE operation, is restarted from the outset. That is, in accordance with the timing chart of FIG. 7, an AKE status command is transferred (S1) and the authentication processing is restarted from the outset.

According to the embodiment of the present invention, in the case where the authentication processing, that is, AKE operation, is performed by passing the AKE command directly to and from the node on the different 1394 bus, if bus resetting occurs on one 1394 bus during the AKE operation, it is possible to notify the bus resetting to the other node. Even if bus resetting occurs on the one 1394 bus during the apparatus authentication under copy protection, it is possible to avoid any inconvenience that a deadlock state is involved until there occurs a time-out.

### <Another Embodiment according to the Present Invention>

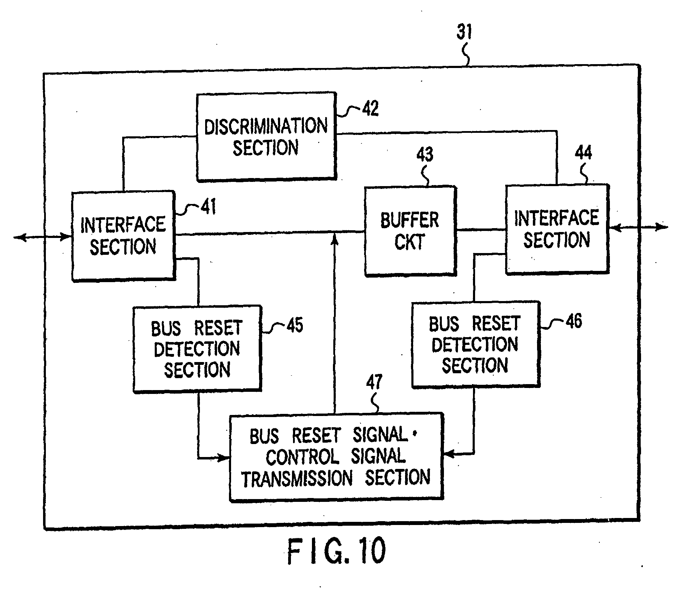

Although, in the above-mentioned embodiment, the bus resetting is notified to an another party's side bus by the DTCP processing node apparatuses N1 to N7 (FIG. 8) and the DTCP interrupt processing is judged (FIG. 9), the DTCP bus bridges 31 and 32 can notify the occurrence of the bus resetting. FIG. 10 shows an arrangement of a bus bridge apparatus 31 in such a case. In FIG. 10, the bus bridge apparatus 31 has an interface 41 and discrimination section 42 on one bus, a buffer circuit 43, and an interface 41 on the other bus and further has two bus reset detection sections 45, 46 each detecting "bus resetting" on the corresponding bus and a bus reset signal • control signal transmitting section 47 for outputting a bus reset signal R, a control signal, etc., for instructing an authentication processing interruption, etc. By the arrangement, the DTCP bus bridge, if authentication processing is started relative to the apparatus on a different 1394 bus, monitors it and, if bus resetting occurs on the 1394 bus B1 during the authentication processing, notifies this to a given apparatus B on the 1394 bus B2 as shown in the flow chart shown in FIG. 8. As shown in the flow chart in FIG. 9, the DTCP bus bridge judges whether or not any authentication processing is performed and transfers a corresponding control signal to respective node apparatuses.

Although, in the above-mentioned embodiment, use is made of a new AKE notify command which notifies the occurrence of "bus resetting" if this occurs, it is also possible to use an existent AKE command and, by doing so, to obtain the same effect. This is the method which, if bus resetting occurs, uses an AKE CANCEL subfunction command (CANCEL subfunction command). In this case, a method is considered by which, if bus resetting occurs, 1 is set to the MSB of an operand [4] of the AKE CANCEL subfunction command.

Although, in the above-mentioned embodiment, an explanation has been made about the apparatus on the 1394 bus, it is needless to say that the same result can be obtained even in another network. It is possible to apply the present invention to the network of, for example, the USB and Bluetooth.

Although, in the above-mentioned embodiment, an explanation has been made about the DTCP processing, it is possible to obtain the same effect in other authentication processing such as authentication processing using, for example, a key.

In the case where, according to the present invention, as set out above, bus resetting occurs relative to the apparatus on one different bus via the bus bridge apparatus during the apparatus authentication under copy protection, the occurrence of the bus resetting is notified to the other node apparatus and, by doing so, it is possible to quickly and positively continue the DTCP processing.

## Claims

1. A first network communication apparatus (N1, N2) which can be detachably connected to a network during an operation, comprising:
transfer processing means (15, 25) for allowing digital data to be transferred to a second network communication apparatus (N4) on a second network via a bus bridge apparatus (31) through which a first network (B1) having the first network communication apparatus connected thereto and the second network are connected; and
notifying means (15) for, when bus resetting occurs on the first network, generating a notify signal for notifying the occurrence of the bus resetting and supplying the notify signal at least to the second network communication apparatus on the second network through the bus bridge apparatus;
**characterized by**
receiving means (15) for receiving the notify signal for notifying the occurrence of the bus resetting on the second network;
judging means (13) for, when the receiving means receives the notify signal, judging whether or not the first network communication apparatus performs authentication processing relative to the second network communication apparatus connected to the second network; and
interrupting means (13, 14) for, when the judging means judges that the first network communication apparatus performs authentication processing relative to the second network communication apparatus, interrupting the authentication processing.

2. A first network communication apparatus according to claim 1, **characterized in that** the network is comprised of a network under the IEEE1394 protocol.

3. A first network communication apparatus according to claim 1, **characterized in that** the network is comprised of a network under the USB (Universal Serial Bus) protocol.

4. A first network communication apparatus according to claim 1, wherein the bridge apparatus further comprises: means for continuing presently-executed processing if the judging means determines that the authentication processing is not being executed.

5. A bridge apparatus comprising:
transmitting/receiving means (41, 43, 44) for receiving a signal from a first node apparatus (N1) connected to a first network (B1) connected to the bridge apparatus and transmitting the signal to a second node apparatus (N4) connected to a second network (B2) different from the first network and further for receiving a sitignal from the second node apparatus of the second network and transmitting the signal to the first node apparatus of the first network; **characterized by**
control signal transmitting means (45, 46, 47) which is adapted to, when bus resetting occurs at one of the first network and second network, if the node apparatus connected to the other network performs authentication processing, generate a control signal for interrupting this processing and to transmit the control signal to the node apparatus connected to said other network.

6. A bridge apparatus according to claim 5, **characterized in that** the control signal transmitting means includes control signal transmitting means (45, 46, 47) which is adapted to, when a notify signal (R) showing that the bus resetting occurs at said one network is received, if the node apparatus connected to said other network performs authentication processing, generate a control signal for interrupting this processing and to transmit this signal to the node apparatus connected to said other network.

7. A bridge apparatus according to claim 5, **characterized by** further comprising:
transmitting/receiving means (41, 43, 44) for transmitting and receiving a signal between the first node apparatus (N1) connected to the first network (B1) connected to the bridge apparatus and a third node apparatus (N7) provided on a third network (B3) connected to a second bridge apparatus (32) connected to the second network (B2) different from the first network; and
control signal transmitting means (45, 46, 47) for, when bus resetting occurs on the first network, generating a notify signal for notifying the occurrence of the bus resetting and transmitting this signal to the second bridge apparatus.

8. A bridge apparatus according to claim 5, **characterized in that** the authentication processing is comprised of the other party's apparatus authentication processing using a key.

9. A method for a network communication apparatus (N1, N2) comprising:
a transfer processing step (15, 25) for performing digital data transferring process between a first network communication apparatus (N1) on a first network (B1) and a second network communication apparatus (N4) on a second network (B2) by using a bus bridge apparatus (31) connected to the first network and the second network;
a notifying step (15) for, when bus resetting occurs on the first network, generating a notify signal for notifying the occurrence of the bus resetting and supplying the notify signal at least to the second network communication apparatus on the second network through the bus bridge apparatus;
a receiving step for receiving the notify signal for notifying the occurrence of the bus resetting on the second network;
a judging step for, when the notify signal is received, judging whether or not the first network communication apparatus performs authentication processing relative to the second network communication apparatus connected to the second network; and
an interrupting step for, when it is judged that authentication processing relative to the second network communication apparatus is carried out, interrupting the authentication processing.

10. A method for a bridge apparatus (N1, N2) comprising:
a transmitting/receiving step (41, 43, 44) for receiving a signal from a first node apparatus (N1) connected to a first network (B1) connected to a bridge apparatus and transmitting the signal to a second node apparatus (N4) connected to a second network (B2) different from the first network and further receiving a signal from the second node apparatus of the second network and transmitting the signal to the first node apparatus of the first network; and
a control signal transmitting step (45, 46, 47) for, when bus resetting occurs at one of the first network and second network and the node apparatus connected to the other network performs authentication processing, generating a control signal for interrupting the authentication processing, by using the bridge apparatus;
and a step of transmitting the control signal to the note apparatus connected to the other network.

## Patentansprüche

1. Erste Netzwerkkommunikationsvorrichtung (N1, N2), die entfernbar mit einem Netzwerk während eines Betriebs verbunden sein kann, mit:
einem Transferverarbeitungsmittel (15, 25), um zu ermöglichen, dass Digitaldaten, die an eine zweite Netzwerkkommunikationsvorrichtung (N4) an einem zweiten Netzwerk über eine Bus-Brückenvorrichtung (31), durch die ein erstes Netzwerk (B1), mit dem die erste Netzwerkkommunikationsvorrichtung verbunden ist, und das zweite Netzwerk verbunden sind, zu übertragen sind; und
einem Mitteilungsmittel (15) zum Erzeugen eines Mitteilungssignal, wenn eine Bus-Zurücksetzung auf dem ersten Netzwerk stattfindet, zum Mitteilen des Stattfindens der Bus-Zurücksetzung und zum Liefern des Mitteilungssignals zumindest an die zweite Netzwerkkommunikationsvorrichtung an dem zweiten Netzwerk über die Bus-Brückenvorrichtung;
**gekennzeichnet durch**
ein Empfangsmittel (15) zum Empfangen des Mitteilungssignals zum Mitteilen des Stattfindens der Bus-Zurücksetzung an dem zweiten Netzwerk;
ein Beurteilungsmittel (13) zum Beurteilen, wenn das Empfangsmittel das Mitteilungssignal empfängt, ob die erste Netzwerkkommunikationsvorrichtung eine Authentifizierungsverarbeitung bezüglich der mit dem zweiten Netzwerk verbundenen zweiten Netzwerkkommunikationsvorrichtung durchführt oder nicht; und
ein Unterbrechungsmittel (13, 14) zum Unterbrechen der Authentifizierungsverarbeitung, wenn das Beurteilungsmittel beurteilt, dass die erste Netzwerkkommunikationsvorrichtung eine Authentifizierungsverarbeitung bezüglich der zweiten Netzwerkkommunikationsvorrichtung durchführt.

2. Erste Netzwerkkommunikationsvorrichtung gemäß Anspruch 1, **dadurch gekennzeichnet, dass** das Netzwerk aus einem Netzwerk gemäß dem IEEE1394-Protokoll aufgebaut ist.

3. Erste Netzwerkkommunikationsvorrichtung gemäß Anspruch 1, **dadurch gekennzeichnet, dass** das Netzwerk aus einem Netzwerk gemäß dem USB-Protokoll aufgebaut ist.

4. Erste Netzwerkkommunikationsvorrichtung gemäß Anspruch 1, bei der die Brückenvorrichtung ferner umfasst: ein Mittel zum Fortsetzen einer gegenwärtig ausgeführten Verarbeitung, wenn das Beurteilungsmittel bestimmt, dass die Authentifizierungsverarbeitung nicht ausgeführt wird.

5. Brückenvorrichtung mit:
einem Sende/Empfangsmittel (41, 43, 44) zum Empfangen eines Signals von einer ersten Knotenvorrichtung (N1), die mit einem ersten Netzwerk (B1) verbunden ist, das mit der Brückenvorrichtung verbunden ist, und zum Senden des Signals an eine zweite Knotenvorrichtung (N4), die mit einem zweiten Netzwerk (B2) verbunden ist, das sich von dem ersten Netzwerk unterscheidet, und ferner zum Empfangen eines Signals von der zweiten Vorrichtung des zweiten Netzwerks und zum Senden des Signals an die erste Knotenvorrichtung des ersten Netzwerks;
**gekennzeichnet durch**
ein Steuersignalsendemittel (45, 46, 47), das angepasst ist, zum Erzeugen eines Steuersignals, wenn eine Bus-Zurücksetzung an dem ersten Netzwerk oder dem zweiten Netzwerk stattfindet, wenn die mit dem anderen Netzwerk verbundene Knotenvorrichtung eine Authentifizierungsverarbeitung durchführt, zum Unterbrechen dieser Verarbeitung und zum Senden des Steuersignals an die mit dem anderen Netzwerk verbundene Knotenvorrichtung.

6. Brückenvorrichtung gemäß Anspruch 5, **dadurch gekennzeichnet, dass** das Steuersignalsendemittel ein Steuersignalsendemittel (45, 46, 47) umfasst, das angepasst ist, zum Erzeugen eines Steuersignals, wenn ein Mitteilungssignal (R) zeigt, dass die Bus-Zurücksetzung an dem einen Netzwerk empfangen wird, wenn die mit dem anderen Netzwerk verbundene Knotenvorrichtung die Authentifizierungsverarbeitung durchführt, zum Unterbrechen dieser Verarbeitung und zum Senden dieses Signals an die mit dem anderen Netzwerk verbundene Knotenvorrichtung.

7. Brückenvorrichtung gemäß Anspruch 5, ferner **gekennzeichnet durch**:
ein Sende/Empfangsmittel (41, 43, 44) zum Senden und Empfangen eines Signals zwischen der ersten Knotenvorrichtung (N1), die mit dem ersten Netzwerk (B1) verbunden ist, das mit der Brückenvorrichtung verbunden ist, und einer dritten Knotenvorrichtung (N7), die an einem dritten Netzwerk (B3) bereitgestellt ist, das mit einer zweiten Brückenvorrichtung (32) verbunden ist, die mit dem von dem ersten Netzwerk unterschiedlichen zweiten Netzwerk (B2) verbunden ist; und
ein Steuersignalsendemittel (45, 46, 47) zum Erzeugen
eines Mitteilungssignals, wenn eine Bus-Zurücksetzung auf dem ersten Netzwerk stattfindet, zum Mitteilen des Stattfindens der Bus-Zurücksetzung, und zum Senden dieses Signals an die zweite Brückenvorrichtung.

8. Brückenvorrichtung gemäß Anspruch 5, **dadurch gekennzeichnet, dass** die Authentifizierungsverarbeitung aus der Vorrichtungsauthentifizierungsverarbeitung des anderen Teilnehmers mittels eines Schlüssels aufgebaut ist.

9. Verfahren für eine Netzwerkkommunikationsvorrichtung (N1, N2) mit:
einem Transferverarbeitungsschritt (15, 25) zum Durchführen eines Digitaldaten-Transferprozesses zwischen einer ersten Netzwerkkommunikationsvorrichtung (N1) auf einem ersten Netzwerk (B1) und einer zweiten Netzwerkkommunikationsvorrichtung (N4) auf einem zweiten Netzwerk (B2) mittels einer Bus-Brückenvorrichtung (31), die mit dem ersten Netzwerk und dem zweiten Netzwerk verbunden ist;
einem Mitteilungsschritt (15) zum Erzeugen eines Mitteilungssignals, wenn die Bus-Zurücksetzung auf dem ersten Netzwerk stattfindet, zum Mitteilen des Stattfindens der Bus-Zurücksetzung und zum Liefern des Mitteilungssignals zumindest an die zweite Netzwerkkommunikationsvorrichtung auf dem zweiten Netzwerk durch die Bus-Brückenvorrichtung;
einem Empfangsschritt zum Empfangen des Mitteilungssignals zum Mitteilen des Stattfindens der Bus-Zurücksetzung auf dem zweiten Netzwerk;
einem Beurteilungsschritt zum Beurteilen, wenn das Mitteilungssignal empfangen wird, ob die erste Netzwerkkommunikationsvorrichtung eine Authentifizierungsverarbeitung bezüglich der mit dem zweiten Netzwerk verbundenen zweiten Netzwerkkommunikationsvorrichtung durchführt oder nicht; und
einem Unterbrechungsschritt zum Unterbrechen der Authentifizierungsverarbeitung, wenn beurteilt wird, dass die Authentifizierungsverarbeitung bezüglich der zweiten Netzwerkkommunikationsvorrichtung durchgeführt wird.

10. Verfahren für eine Brückenvorrichtung (N1, N2) mit:
einem Sende/Empfangsschritt (41, 43, 44) zum Empfangen eines Signals von einer mit einem ersten Netzwerk (B1) verbundenen ersten Knotenvorrichtung (N1), die mit einer Brückenvorrichtung verbunden ist, und zum Senden des Signals an eine zweite Knotenvorrichtung (N4), die mit einem von dem ersten Netzwerk unterschiedlichen zweiten Netzwerk (B2) verbunden ist, und ferner zum Empfangen eines Signals von der zweiten Knotenvorrichtung des zweiten Netzwerks und zum Senden des Signals an die erste Knotenvorrichtung des ersten Netzwerks; und
einem Steuersignalsendeschritt (45, 46, 47) zum Erzeugen eines Steuersignals, wenn die Bus-Zurücksetzung an dem ersten Netzwerk oder dem zweiten Netzwerk stattfindet und die mit dem anderen Netzwerk verbundene Knotenvorrichtung eine Authentifizierungsverarbeitung durchführt, zum Unterbrechen der Authentifizierungsverarbeitung mittels der Brückenvorrichtung;
und einem Schritt zum Senden des Steuersignals an die mit dem anderen Netzwerk verbundene Knotenvorrichtung.

## Revendications

1. Premier appareil de communication de réseau (N1, N2) qui peut être raccordé de façon détachable à un réseau pendant une opération, comprenant :
un moyen de traitement de transfert (15, 25) pour permettre aux données numériques d'être transférées à un second appareil de communication de réseau (N4) sur un second réseau via un appareil de passerelle de bus (31) à travers lequel un premier réseau (B1) ayant le premier appareil de communication de réseau raccordé à celui-ci et le second réseau sont raccordés ; et
un moyen de notification (15) pour, lorsque la réinitialisation de bus se produit sur le premier réseau, générer un signal de notification pour notifier l'occurrence de la réinitialisation du bus et pour fournir le signal de notification au moins au second appareil de communication de réseau sur le second réseau à travers l'appareil de passerelle de bus ;
**caractérisé par**
un moyen de réception (15) pour recevoir le signal' de notification pour notifier l'occurrence de la réinitialisation de bus sur le second réseau ;
un moyen de test (13) pour, lorsque le moyen de réception reçoit le signal de notification, notifier si oui ou non le premier appareil de communication de réseau réalise un traitement d'authentification relatif au second appareil de communication de réseau raccordé au second réseau ; et
un moyen d'interruption (13, 14) pour, lorsque le moyen de test teste que le premier appareil de communication de réseau réalise un traitement d'authentification relatif au second appareil de communication de réseau, interrompre le traitement d'authentification.

2. Premier appareil de communication de réseau selon la revendication 1, **caractérisé en ce que** le réseau est composé d'un réseau sous le protocole IEEE 1394.

3. Premier appareil de communication de réseau selon la revendication 1, **caractérisé en ce que** le réseau est composé d'un réseau sous le protocole USB (Universal Serial Bus).

4. Premier appareil de communication de réseau selon la revendication 1, dans lequel l'appareil de passerelle comprend en outre : un moyen pour continuer le traitement exécuté actuellement si le moyen de test détermine que le traitement d'authentification n'est pas exécuté.

5. Appareil de passerelle comprenant :
un moyen de transmission/réception (41, 43, 44) pour recevoir un signal à partir d'un premier appareil de noeud (N1) raccordé à un premier réseau (B1) raccordé à l'appareil de passerelle et pour transmettre le signal à un second appareil de noeud (N4) raccordé à un second réseau (B2) différent du premier réseau et en outre pour recevoir un signal à partir du second appareil de noeud du second réseau et pour transmettre le signal au premier appareil de noeud du premier réseau ; **caractérisé par**
un moyen de transmission de signal de commande (45, 46, 47) qui est adapté, pour lorsque la réinitialisation de bus se produit sur le premier réseau et sur le second réseau, si l'appareil de noeud raccordé à l'autre réseau réalise un traitement d'authentification, générer un signal de commande pour interrompre ce traitement et pour transmettre le signal de commande à l'appareil de noeud raccordé audit autre réseau.

6. Appareil de passerelle selon la revendication 5, **caractérisé en ce que** le moyen de transmission de signal de commande comprend un moyen de transmission de signal de commande (45, 46, 47) qui est adapté, lorsqu'un signal d'authentification (R) est reçu montrant que la réinitialisation de bus se produit sur ledit réseau, si l'appareil de noeud raccordé audit autre réseau réalise un traitement d'authentification, pour générer un signal de commande pour interrompre ce traitement et pour transmettre ce signal à l'appareil de noeud raccordé audit autre réseau.

7. Appareil de passerelle selon la revendication 5, **caractérisé en ce qu'**il comprend en outre :
un moyen de transmission/réception (41, 43, 44) pour transmettre et recevoir un signal entre le premier appareil de noeud (N1) raccordé au premier réseau (B1) raccordé à l'appareil de passerelle et un troisième appareil de noeud (N7) placé sur un troisième réseau (B3) raccordé à un second appareil de passerelle (32) raccordé au second réseau (B2) différent du premier réseau ; et
un moyen de transmission de signal de commande (45, 46, 47) pour, lorsque la réinitialisation du bus se produit sur le premier réseau, générer un signal de notification pour notifier l'occurrence de la réinitialisation de bus et pour transmettre ce signal au second appareil de passerelle.

8. Appareil de passerelle selon la revendication 5, **caractérisé en ce que** le traitement d'authentification est composé de l'autre traitement d'authentification d'appareil tiers en utilisant une clé.

9. Procédé pour un appareil de communication de réseau (N1, N2) comprenant :
une étape de traitement de transfert (15, 25) pour réaliser un traitement de transfert de données numériques entre un premier appareil de communication de réseau (N1) sur un premier réseau (B1) et un second appareil de communication de réseau (N4) sur un second réseau (B2) en utilisant un appareil de passerelle de bus (31) raccordé au premier réseau et au second réseau ;
une étape de notification (15) pour, lorsque la réinitialisation de bus se produit sur le premier réseau, générer un signal de notification pour notifier l'occurrence de la réinitialisation de bus et pour fournir le signal de notification au moins au second appareil de notification de réseau sur le second réseau à travers ledit appareil de passerelle de bus ;
une étape de réception pour recevoir le signal de notification pour notifier l'occurrence de la réinitialisation de bus sur le second réseau ;
une étape de test pour, lorsque le signal de notification est reçu, tester si oui ou non le premier appareil de communication de réseau réalise un traitement d'authentification relatif au second appareil de communication de réseau raccordé au second réseau ; et
une étape d'interruption, lorsqu'on teste que le traitement d'authentification relatif au second appareil de communication de réseau est réalisé, pour interrompre le traitement d'authentification

10. Procédé pour un appareil de passerelle (N1 N2) comprenant :
une étape d'émission/réception (41, 43, 44) pour recevoir un signal à partir d'un premier appareil de noeud (N1) raccordé à un premier noeud (B1) raccordé à un appareil de passerelle et pour transmettre le signal à un second appareil de noeud (N4) raccordé au second réseau (B2) différent du premier réseau et pour recevoir en outre un signal du second appareil de noeud du second réseau et pour transmettre le signal au premier appareil de noeud du premier réseau ; et
une étape d'émission de signal de commande (45, 46, 47) pour, lorsque la réinitialisation du bus se produit sur un du premier réseau et du second réseau et l'appareil de noeud raccordé à l'autre réseau réalise un traitement d'authentification, générer un signal de commande pour interrompre le traitement d'authentification, en utilisant l'appareil de passerelle ;
et une étape d'émission du signal de commande à l'appareil de noeud raccordé à l'autre réseau.
